# EUROPEAN PATENT SPECIFICATION

(11) **EP 4 480 813 B1**
(45) Date of publication and mention of the grant of the patent: **17.12.2025**
(21) Application number: 24184005.7
(22) Date of filing: 24.06.2024
(51) Int. Cl.: B64C 11/32, B64C 11/38, B64F 5/60

(54) **AUTOMATED PROPELLER FEATHERING TEST**
AUTOMATISIERTER PROPELLERSEGELSTELLUNGTEST
TEST AUTOMATISÉ DE MISE EN DRAPEAU D'UNE HÉLICE

(30) Priority: 22.06.2023 US 202318212823
(43) Date of publication of application: 25.12.2024
(73) Proprietor: PRATT & WHITNEY CANADA CORP., Longueuil, Québec J4G 1A1 (CA)
(72) Inventor: DUKE, Brant, (01BE5) Longueuil J4G 1A1 (CA); MATHESON, Kenneth, (01BE5) Longueuil J4G 1A1 (CA)
(74) Representative: Dehns

(56) References cited:
- EP-A1- 3 093 234
- US-A- 5 019 006
- US-B2- 10 717 545

## Description

### TECHNICAL FIELD

The present application relates to the field of propeller feathering and more particularly, to dormancy tests for propeller feathering.

### BACKGROUND OF THE ART

A feathered propeller has its blades moved to an extremely high pitch angle of approximately 90° so that they face perpendicular to the airstream and produce minimal aerodynamic drag. This may be done intentionally during a flight to decrease the drag on an airplane, and prevent windmilling of the propeller. As this function is often used in emergency conditions in flight, regular testing of propeller feather functions is performed. Such testing is used to exercise the feathering mechanisms of the propeller, in order to ensure that there are no dormant failures present within the feather activation system. This activation system may include any one of electronic, electrical, mechanical, and hydraulic features used to successfully feather the propeller.

The feather test is conducted manually by a pilot, at engine start and taxi-out of the aircraft. A push-button test switch is activated from the cockpit to command feathering of the propeller system. A successful feather test results in an audible drop in propeller speed which is detectable by the pilot. The feather test switch is then released to cancel the feather test operation.

The document EP 3 093 234 A1 discloses a system for testing a propeller feathering function, the system comprising: a memory; a processor coupled to the memory; and an application stored in the memory and comprising program code executable by the processor for monitoring a rotational speed over time of propeller blades of an aircraft; automatically commanding an angle change of the propeller blades; comparing a post-angle change rotational speed of the propeller blades to an expected rotational speed without the commanded angle change and obtaining a rotational speed difference; and issuing a test passed signal when the rotational speed difference exceeds a threshold and a test failed signal when the rotational speed difference does not exceed the threshold. A corresponding method is also disclosed.

There is a need to improve propeller feather testing functions.

### SUMMARY

There is described herein the automation of propeller feather testing functions, whereby the test is automatically performed and a pass/fail signal is issued upon completion. The automated propeller feather test may be a system dormancy test and it may be performed while the aircraft is on the ground, during shutdown, or during other phases of engine operation.

In one aspect, there is provided a computer-implemented method for testing a propeller feathering function, the method including monitoring over time, by a processor of a computing device, a torque applied to a rotor shaft assembly operatively connected to a propeller of an aircraft, commanding, by the processor of the computing device, an angle change of propeller blades of the propeller in response to receipt, at the processor, of a trigger signal generated upon initiation of a task or procedure performed within the aircraft, comparing, by the processor of the computing device and in response to the angle change being commanded, a post-angle change torque applied to the rotor shaft assembly to an expected torque without the commanded angle change and obtaining, by the processor, a torque difference, and issuing, by the processor of the computing device, a test passed signal when the torque difference exceeds a threshold and a test failed signal when the torque difference does not exceed the threshold.

In another aspect, there is provided a system for testing a propeller feathering function, the system including a memory, a processor coupled to the memory, and an application stored in the memory and comprising program code executable by the processor for monitoring over time a torque applied to a rotor shaft assembly operatively connected to a propeller of an aircraft, commanding an angle change of propeller blades of the propeller in response to receipt of a trigger signal generated upon initiation of a task or procedure performed within the aircraft, comparing, in response to the angle change being commanded, a post-angle change torque applied to the rotor shaft assembly to an expected torque without the commanded angle change and obtaining a torque difference, and issuing a test passed signal when the torque difference exceeds a threshold and a test failed signal when the torque difference does not exceed the threshold.

### DESCRIPTION OF THE DRAWINGS

Reference is now made to the accompanying figures in which:
FIG. 1 is a schematic side cross-sectional view of an exemplary gas turbine engine;
FIG. 2A is a block diagram of an exemplary aircraft propeller control system;
FIG. 2B is a block diagram of sub-systems of the examplary gas turbine engine of FIG. 1, with a torque sensor operatively connected to a rotor shaft assembly;
FIG. 2C is a block diagram of sub-systems of the examplary gas turbine engine of FIG. 1, with a pressure based torque sensor operatively connected to the rotor shaft assembly;
FIG. 3 is a flowchart of an exemplary method for testing a propeller feathering function;
FIG. 4 is a graph of feather command, torque applied to a rotor shaft assembly, propeller speed and beta position versus time for an embodiment of testing the propeller feathering function;
FIG. 5 is a block diagram of an exemplary embodiment for the feathering test system; and
FIG. 6 is a block diagram of an exemplary embodiment of an application running on the processor of the feathering test system.

### DETAILED DESCRIPTION

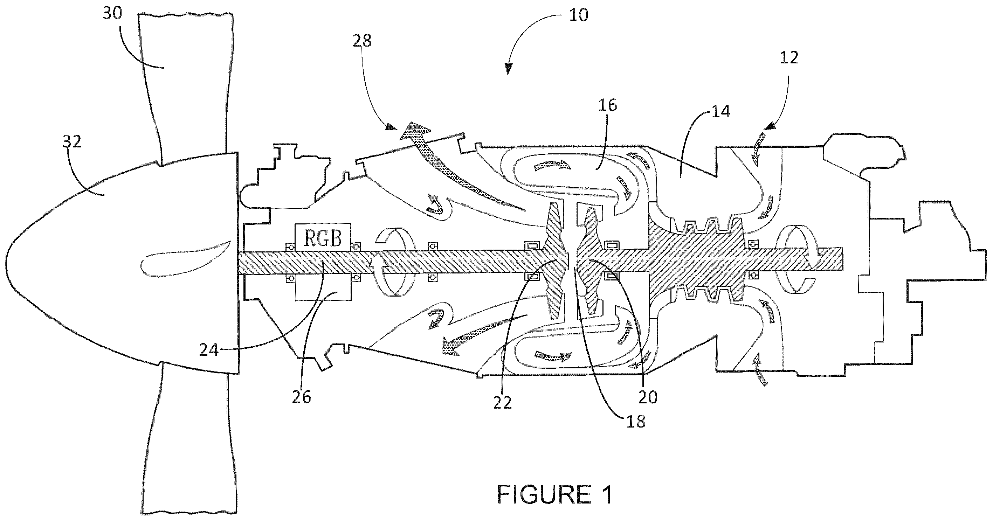

Figure 1 illustrates an exemplary engine 10, namely a gas turbine engine, comprising an inlet 12, through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. The turbine section 18 illustratively comprises a compressor turbine 20, which drives the compressor assembly and accessories, and at least one power or free turbine 22, which is independent from the compressor turbine 20 and drives the rotor shaft assembly 24 through the reduction gearbox 26. Hot gases may then be evacuated through exhaust stubs 28. A rotor 30, in the form of a propeller through which ambient air is propelled, is hosted in a propeller hub 32. The rotor 30 is operatively connected to the rotor shaft assembly 24 and is driven by the power turbine 22. Rotor 30 may, for example, comprise a propeller of a fixed-wing aircraft or a main (or tail) rotor.

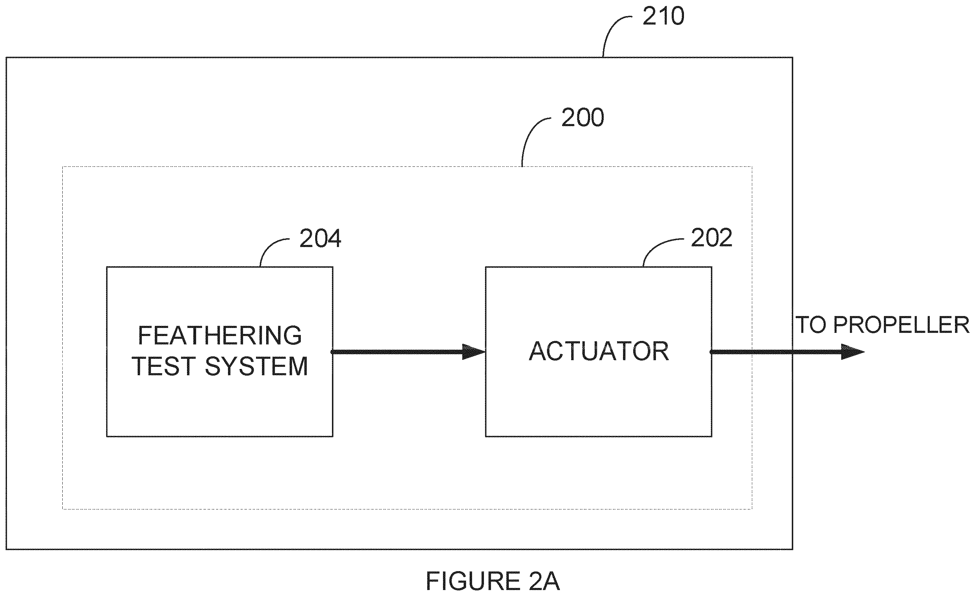

Referring to FIG. 2A, the aircraft engine 10 may be used in combination with an aircraft propeller control system 200, comprising an actuator 202 for modifying blade pitch for propeller feathering, and a feathering test system 204. The aircraft propeller control system 200 is integrated into an electronic engine controller (EEC) 210. In other implementations, the aircraft propeller control system 200 could be provided separate from the EEC 210. The propeller 30 converts rotary motion from the engine 10 to provide propulsive force to the aircraft. The pitch of the propeller 30 is variable and may be modified by the actuator 202. The actuator 202 may take different forms, depending on the type of engine and/or aircraft. In some embodiments, there may also be gearing, such as that found on turboprop aircraft. The actuator 202 may rotate the blades of the propeller 30 parallel to airflow in order to reduce drag in case of an engine failure. Such rotation may take the form of an increase (towards feathered position) or a decrease (away from feathered position) in blade pitch. The effect of an increase in blade pitch is to increase the gliding distance of the aircraft and in some cases, to maintain altitude with reduced engine power. The effect of a decrease in blade pitch is to help slow down an aircraft after landing in order to save wear on the brakes and tires.

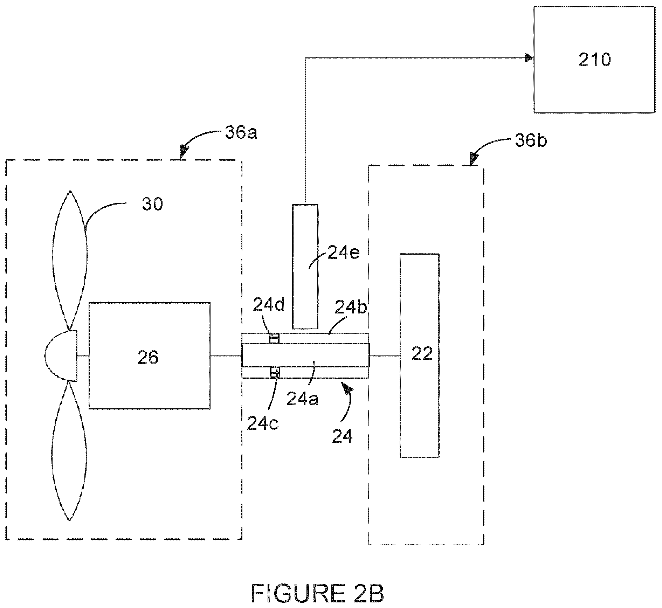

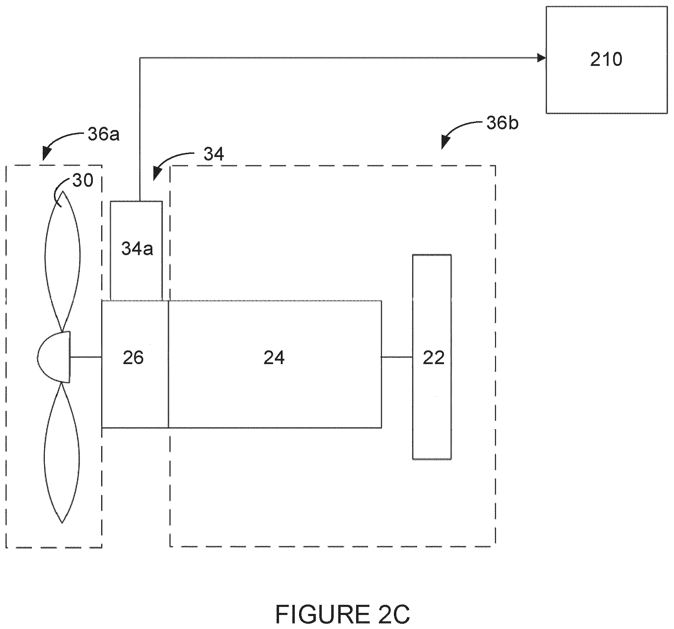

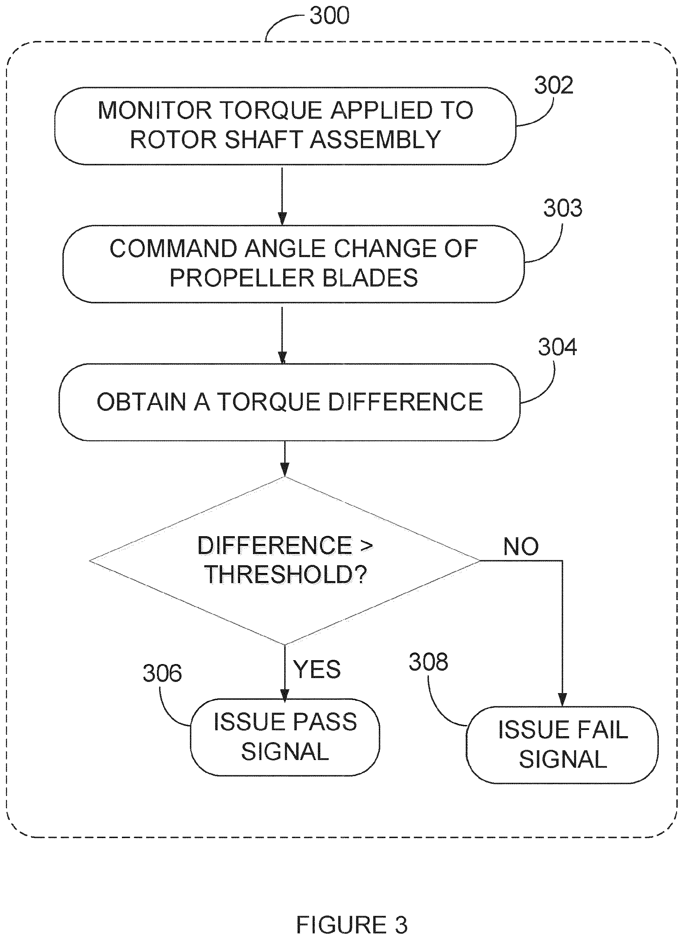

The feathering test system 204 is coupled to the actuator 202 and configured to perform testing of a propeller feathering function of an aircraft, as illustrated in the exemplary method 300 of FIG. 3. As per step 302, the torque applied to the rotor shaft assembly 24 is monitored. The monitoring over time of the torque can be achieved in various ways. Referring to FIG. 2B, the rotor shaft assembly 24 includes coaxial inner shaft 24a and outer shaft 24b. Gears 24c, 24d operatively connect inner shaft 24a and outer shaft 24b. When the inner shaft 24a is loaded by the torque applied across the rotor shaft assembly 24, the inner shaft 24a deflects angularly, and the teeth of gear 24c deflect relative to the teeth of gear 24d. This produces a variably spaced tooth relative to a reference tooth which may be monitored by torque sensor 24e, and the monitoring signal from the torque sensor 24e is fed to the EEC 210 to determine the torque applied to the rotor shaft assembly 24. In an alternative implementation and with reference to FIG. 2C, a hydraulic pressure reaction assembly 34 is operatively connected to the rotor shaft 24 and the EEC 210. The hydraulic pressure reaction assembly 34 includes a hydraulic pressure sensor 34a. The hydraulic pressure reaction assembly 34 creates a variable hydraulic pressure output related to the torque applied to the rotor shaft assembly 24, and the hydraulic pressure sensor 34a can detect the variable hydraulic pressure output. For example, when the torque applied to the rotor shaft assembly 24 is increased, the hydraulic pressure sensor 34a produces a corresponding signal which is fed to the EEC 210.

Referring back to Fig. 3, as per step 303, an angle change of the propeller blades is commanded. The commanded angle change can be performed automatically or manually. The commanded angle change may be performed at any time prior to take-off and/or after landing, i.e. at any moment while the aircraft is on the ground. A trigger signal may be used to initiate the commanded angle change. For example, the feathering test may be associated with another task or procedure performed within the aircraft, such as engine shutdown, engine startup, or another procedure or test regularly performed by the aircraft in preparation for takeoff or after landing. Initiation of the associated task or procedure may generate the trigger signal and cause the automatic change in pitch angle for the propeller blades. The trigger signal may vary as a function of the aircraft model, the engine type, the operating environment, and internal policies/regulations of a given airline.

In some embodiments, step 303 may be preceded by detecting an aircraft-on-ground condition. Detection of an aircraft-on-ground condition may be done using various techniques, such as a weight-on-wheels signal, a ground sensor, an airspeed sensor and a global positioning system. Other techniques may also be used. In such circumstances, step 303 may be performed conditionally upon detection of the aircraft-on-ground condition.

At step 304, a comparison is made between a post-angle change torque applied to the rotor shaft assembly 24 to an expected torque without the commanded angle change for obtaining a torque difference used to detect a change in the torque applied to the rotor shaft assembly 24 subsequent to the commanded angle change compared to an expected torque. Put differently, a post-angle change torque applied to the rotor shaft assembly 24 is compared to the expected torque applied to the rotor shaft assembly 24 had the angle change not occurred, and a torque difference is obtained. The torque difference may be compared to a threshold. A torque difference that meets the threshold is indicative that the feathering function is operational. If the torque difference exceeds (or meets) the threshold, a test pass signal is issued, as per step 306. If the torque difference does not exceed (or does not meet) the threshold, a test failed signal is issued, as per step 308. Monitoring of the torque may be performed using various sensors, already present on the aircraft and used for other purposes, or dedicated to the automated feathering test. In some embodiments, the method 300 comprises returning the blade pitch to a zero pitch angle after a given time period.

In some embodiments, the blade pitch is moved from an initial zero pitch angle to a target pitch angle that is greater than a zero pitch angle and up to a maximum pitch angle (90°), such as but not limited to 5°, 30°, 45°, and 70°. This is referred to as an increase in blade pitch as the blades are moved towards the feathering position. In some embodiments, the blade pitch is moved from an initial zero pitch angle to a target pitch angle that is less than a zero pitch angle and up to a minimum pitch angle (-90°), such as but not limited to -5°, -30°, -45°, and -70°. This is referred to as a decrease in blade pitch as the blades are moved away from the feathering position. In some embodiments, the blade pitch may be increased or decreased from a position other than a zero pitch angle, and the torque applied to the rotor shaft assembly 24 post-angle change is compared to the expected torque applied to the rotor shaft assembly 24 at the pre-angle change position.

In some embodiments, the blade pitch is set to the target pitch angle with a single command. A timer may be used to set an end time for the test. In other words, if a torque difference greater than or equal to the threshold is not detected after a given time period, the test is considered to have failed. The timer may be set for a given number of seconds, minutes, or any other unit of time as appropriate.

Alternatively, the blade pitch may be progressively changed until the target blade pitch is reached. The target blade pitch for the test may vary as a function of the aircraft model, the engine type, the operating environment, and internal policies/regulations of a given airline. The target blade pitch may be fixed or may be programmable. Progressive change of the blade pitch may be used in combination with the timer. In other embodiments, the blade pitch may be progressively changed until it reaches maximum/minimum pitch or until the rotational speed difference meets the threshold, whichever occurs first. The threshold may be set as desired, such as a 5% change, a 10% change, a 25% change, or any other appropriate amount.

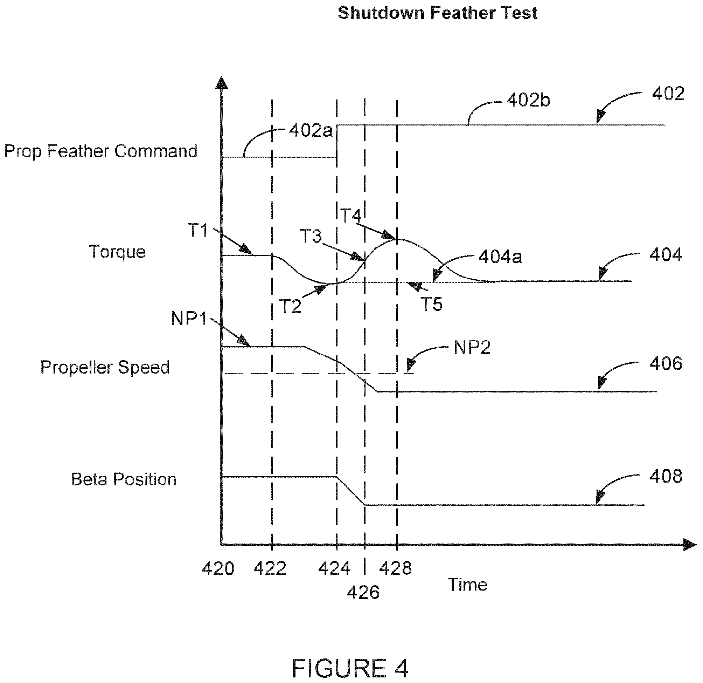

An exemplary embodiment of performing the feathering test at engine shutdown is illustrated in FIG. 4. Curve 402 represents the feather command. In segment 402a of curve 402, the feather command is off. In segment 402b, the feather command is on. Curve 404 represents torque applied to the rotor shaft assembly 24 over time. Curve 406 represents the propeller rotational speed over time. Curve 408 represents the pitch angle of the propeller blade over time. At time 420, the engine 10 is running at constant speed NP1 and torque T1. At time 422, the engine 10 is shutdown and a feathering test is automatically initiated and starts at time 424. At time 424, the feather command of curve 402 passes from segment 402a to 402b, and the pitch angle of curve 408 decreases starting at time 424 toward the target pitch angle until reaching the target pitch angle at time 426. A natural decay rate for the rotational speed of the propeller (curve 406) occurs between time 422 and time 426 due to the removal of rotary motion from the engine. Torque also decays from T1 to T2 between time 422 and time 424 due to the removal of rotary motion from the engine, but in contrast with curve 406, the torque applied to the rotor shaft assembly 24 (curve 404) increases from T2 to T3 between time 424 and time 426, and increases until time 428 to T4 where torque reaches a maximum. Put differently, the torque increases from T2 to T3 between time 424 and time 426 while rotational speed decreases as the blade pitch angle is changed toward the target pitch angle. There can be seen that the increase in torque starts to slow down at time 426 since the blade pitch has reached the target blade pitch. In other words, the point time 246, T3 is an inflexion point on curve 404. The increase in torque applied to the rotor shaft assembly 24 between time 424 and time 428 is due to the increased aerodynamic drag of the propeller caused by the change in blade pitch, i.e. when the blade pitch changes to the target blade pitch. Curve 404a shows what the expected torque T5 would be had no feathering occur. Curve 404a follows curve 404 until T2, and torque remains stable over time past time 424. In some implementation, the torque difference is obtained based on T4 and T5. In other implementations, the torque difference is obtained based on T4 and T1. Other torque values could be used in other implementation to obtain the torque difference.

More particularly and referring to FIGS. 2B and 2C, when the propeller 30 is feathered after the engine is shutdown, the rotational acceleration of sub-system 36a including the propeller 30 decreases significantly compared to that of sub-system 36b including the turbine 22. This is due to the increased aerodynamic drag acting on the feathered propeller blades. The difference in acceleration rates between the sub-systems 36a, 36b produces a differential torque on the rotor shaft assembly 24 and this differential torque is detectable by the EEC 210, using the torque sensor 24e (FIG. 2B) or the hydraulic pressure sensor 34a (FIG. 2C), or other sensor(s) in other implementations. Put differently, the torque sensor 24e and the hydraulic pressure sensor 34a measure a torque applied between the sub-systems 36a, 36b, and feed it to the EEC 210 to compare it to the expected torque for obtaining the torque difference for determining whether the feathering test was successful, and thus that the propeller feathering function is operational. Should the torque difference between the expected torque and the torque applied between the sub-systems 36a, 36b be not greater than the threshold, the feathering test is failed.

On curve 406, rotational speed NP2 corresponds to a minimum rotational speed required for the feathering test to be initiated. Having a minimal rotational speed for performing the feathering test reduces the possibility of the test from issuing a false positive.

Monitoring torque applied to the rotor shaft assembly 24 presents the advantages of being less susceptible to false positive and being more robust compared to methods monitoring a rotational speed of the propeller 30 when testing the feathering function.

In some embodiments, monitoring the torque over time comprises monitoring a rate of change of the torque over time. In addition, comparing a post-angle change torque applied to the rotor shaft assembly 24 to an expected torque comprises comparing the rate of change of the torque applied to the rotor shaft assembly 24 to an expected rate of change of a zero pitch angle propeller. If performed at engine shutdown, this may comprise comparing the decay rate of the torque applied to the rotor shaft assembly 24 at the target blade pitch to an expected natural decay rate of a zero pitch angle propeller, as per curve 404. Coordinating the feathering test with engine shutdown allows a common baseline to be used for same aircraft, as the natural decay rate may be consistent between the aircraft. Alternatively, the commanded angle change may be triggered with delay from engine shutdown. This allows the decay rate of the torque applied to the rotor shaft assembly 24 before and after the commanded angle change to be compared, for detection of a change indicative of a successful feathering test.

The feathering test system 204 comprises a combination of hardware and software logic for performing the automatic testing. The feathering test system 204 may be a stand-alone unit or it may be incorporated into existing aircraft systems architecture. For example, the feathering test system 204 may be part of an engine control system, such as an electronic engine control (EEC) or a full authority digital engine control (FADEC). It may also be part of an integrated electronic engine and propeller control system. In some embodiments, the feathering test system 204 comprises a microcontroller and memory. The memory may be SRAM, EEPROM, or Flash and the system 204 may be analog and/or digital based. Sensor values may be read by the microcontroller and data may be interpreted using one or more lookup table. In some embodiments, the feathering test system 204 is programmable and comprises a microprocessor which can process the inputs from engine sensors in real-time. Hardware may comprise electronic components on a printed circuit board (PCB), ceramic substrate, or thin laminate substrate, with a microcontroller chip as a main component. Software code may be stored in the microcontroller or other chips, and may be updated by uploading new code or replacing the chips.

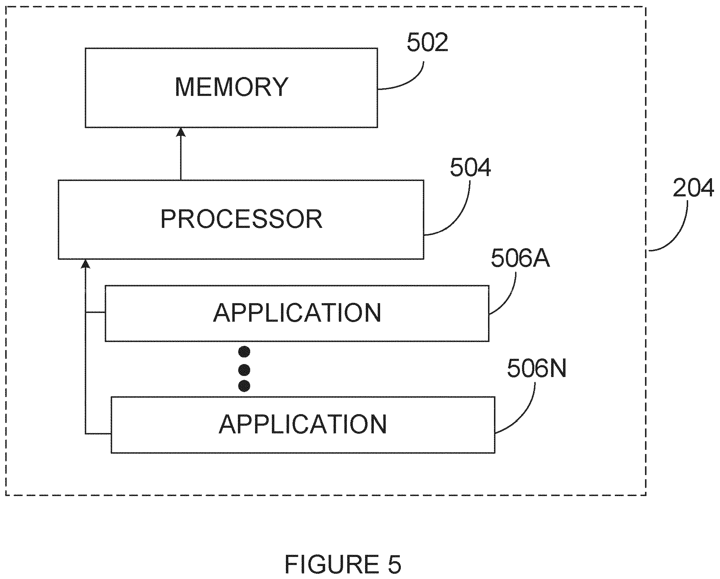

Figure 5 illustrates another exemplary embodiment for the feathering test system 204. The feathering test system 204 may comprise, amongst other things, a plurality of applications 506a ... 506n running on a processor 504 coupled to a memory 502. It should be understood that while the applications 506a ... 506n presented herein are illustrated and described as separate entities, they may be combined or separated in a variety of ways. The memory 502 accessible by the processor 504 may receive and store data. The memory 502 may be a main memory, such as a high speed Random Access Memory (RAM), or an auxiliary storage unit, such as a hard disk, a floppy disk, or a magnetic tape drive. The memory 502 may be any other type of memory, such as a Read-Only Memory (ROM), or optical storage media such as a videodisc and a compact disc. The processor 504 may access the memory 502 to retrieve data. The processor 504 may be any device that can perform operations on data. Examples are a central processing unit (CPU), a front-end processor, a microprocessor, and a network processor. The applications 506a ... 506n are coupled to the processor 504 and configured to perform various tasks.

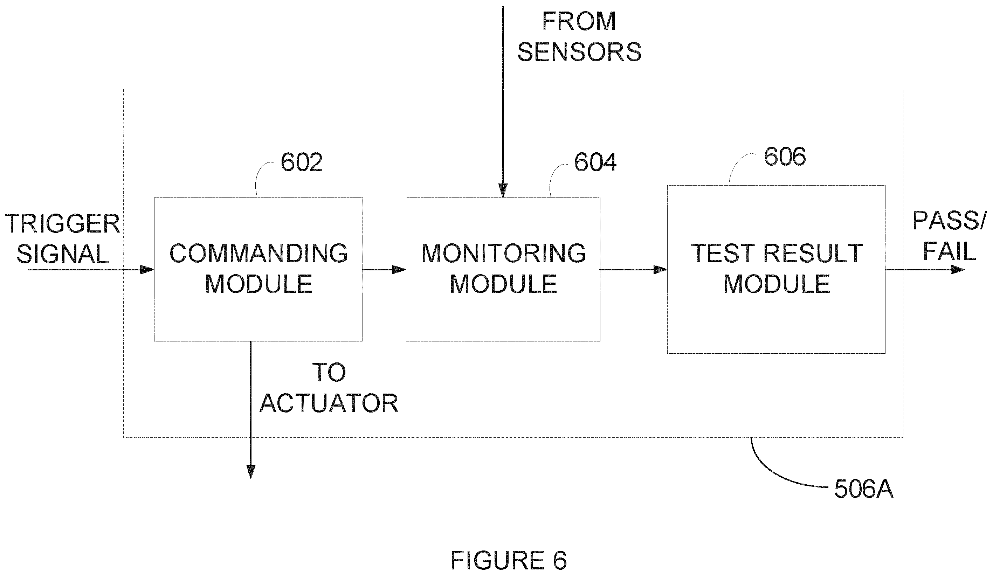

Figure 6 is an exemplary embodiment of an application 506a running on the processor 504. The application 506a illustratively comprises a commanding module 602, a monitoring module 604, and a test result module 606. The commanding module 602 is configured for receiving the trigger signal and automatically commanding the angle change of the propeller blades, via the actuator 202. Once the blade pitch has been modified by the commanding module, the monitoring module 604 may be advised by the commanding module 602. Alternatively, the monitoring module 604 may be configured to continuously monitor torque applied to the rotor shaft assembly 24, or it may itself receive the trigger signal and begin monitoring before the commanding module 602 is instructed to command the angle change. The monitoring module 604 receives from various sensors input data for comparing a post-angle change torque applied to the rotor shaft assembly 24 to an expected torque without the commanded angle change and obtaining a torque difference. The monitoring module 604 is connected to the test result module 606 for transmitting the torque difference thereto. If the torque difference meets the threshold, the test result module 606 will issue a pass signal. If the torque difference does not meet the threshold, the test result module 606 will issue a fail signal.

In some embodiments, the test result module 606 is also configured to issue a maintenance required signal in case of a failed feathering test. The maintenance required signal may be generic and applicable to any failed feathering test. Alternatively, different maintenance required signals may be provided as a function of the specifics of the feathering test. For example, the monitoring module 604 may be configured to determine if the problem is related to the electronics, the actuator, oil, or the propeller blades themselves. This information may be passed on to the test result module 606 and the appropriate maintenance required signal may be issued accordingly. The pass/fail signal may result in a visual indicator for the pilot and/or the ground crew, such as a red light for a failed test and a green light for a passed test. A maintenance required signal may be part of the same visual indicator as a failed test or may result in a separate visual indicator for the pilot and/or ground crew.

Other variants to the configurations of the commanding module 602, the monitoring module 604, and the test result module 606 may also be provided and the example illustrated is simply for illustrative purposes.

The above description is meant to be exemplary only, and one skilled in the relevant arts will recognize that changes may be made to the embodiments described without departing from the scope of the invention disclosed. For example, the blocks and/or operations in the flowcharts and drawings described herein are for purposes of example only. There may be many variations to these blocks and/or operations without departing from the teachings of the present disclosure. For instance, the blocks may be performed in a differing order, or blocks may be added, deleted, or modified. While illustrated in the block diagrams as groups of discrete components communicating with each other via distinct data signal connections, it will be understood by those skilled in the art that the present embodiments are provided by a combination of hardware and software components, with some components being implemented by a given function or operation of a hardware or software system, and many of the data paths illustrated being implemented by data communication within a computer application or operating system. The structure illustrated is thus provided for efficiency of teaching the present embodiment. The present disclosure may be embodied in other specific forms without departing from the subject matter of the claim. Also, one skilled in the relevant arts will appreciate that while the systems, methods and computer readable mediums disclosed and shown herein may comprise a specific number of elements/components, the systems, methods and computer readable mediums may be modified to include additional or fewer of such elements/components. The present disclosure is also intended to cover and embrace all suitable changes in technology. Modifications which fall within the scope of the claims will be apparent to those skilled in the art, in light of a review of this disclosure, and such modifications are intended to fall within the appended claim.

## Claims

1. A computer-implemented method for testing a propeller feathering function, the method comprising:
monitoring over time, by a processor (504) of a computing device, a torque applied to a rotor shaft assembly (24) operatively connected to a propeller (30) of an aircraft;
commanding, by the processor (504) of the computing device, an angle change of propeller blades of the propeller (30) in response to receipt, at the processor (504), of a trigger signal generated upon initiation of a task or procedure, such as an engine shutdown, performed within the aircraft;
comparing, by the processor (504) of the computing device and in response to the angle change being commanded, a post-angle change torque applied to the rotor shaft assembly (24) to an expected torque without the commanded angle change and obtaining, by the processor (504), a torque difference; and
issuing, by the processor (504) of the computing device, a test passed signal when the torque difference exceeds a threshold and a test failed signal when the torque difference does not exceed the threshold.

2. The method of claim 1, wherein monitoring the torque over time comprises monitoring a rate of change of the torque over time.

3. The method of claim 2, wherein comparing a post-angle change torque applied to the rotor shaft assembly (24) to an expected torque comprises comparing the rate of change of the torque applied to the rotor shaft assembly (24) to an expected rate of change of a zero pitch angle propeller.

4. The method of any preceding claim, further comprising detecting an aircraft-on-ground condition, and wherein commanding an angle change of the propeller blades comprises commanding the angle change only when the aircraft-on-ground condition is detected.

5. The method of any preceding claim, wherein monitoring torque over time comprises monitoring one of:
a spacing between teeth of the rotor shaft assembly (24); or
a hydraulic pressure of a hydraulic pressure reaction assembly (34) operatively connected to the rotor shaft assembly (24).

6. The method of any preceding claim, wherein commanding an angle change of the propeller blades comprises commanding an angle change to a target blade pitch that is less than a maximum blade pitch.

7. The method of any preceding claim, wherein commanding an angle change of the propeller blades comprises progressively changing a pitch of the propeller blades until a target blade pitch is reached.

8. The method of claim 7, wherein comparing a post-angle change torque applied to the rotor shaft assembly (24) to an expected torque comprises comparing until a first one of reaching the target blade pitch and obtaining the torque difference that exceeds the threshold occurs.

9. The method of any preceding claim, wherein comparing a post-angle change torque applied to the rotor shaft assembly (24) to an expected torque comprises comparing a rotational speed of the propeller (30) to a threshold rotational speed, and determining whether the rotational speed of the propeller (30) is above the threshold rotational speed.

10. A system (204) for testing a propeller feathering function, the system (204) comprising:
a memory (502);
a processor (504) coupled to the memory (502); and
an application (506a) stored in the memory (502) and comprising program code executable by the processor (504) for:
monitoring over time a torque applied to a rotor shaft assembly (24) operatively connected to a propeller (30) of an aircraft;
commanding an angle change of propeller blades of the propeller (30) in response to receipt of a trigger signal generated upon initiation of a task or procedure, such as an engine shutdown, performed within the aircraft;
comparing, in response to the angle change being commanded, a post-angle change torque applied to the rotor shaft assembly (24) to an expected torque without the commanded angle change and obtaining a torque difference; and
issuing a test passed signal when the torque difference exceeds a threshold and a test failed signal when the torque difference does not exceed the threshold.

11. The system (204) of claim 10, wherein monitoring the torque over time comprises monitoring a rate of change of the torque over time.

12. The system (204) of claim 11, wherein comparing a post-angle change torque applied to the rotor shaft assembly (24) to an expected torque comprises comparing the rate of change of the torque applied to the rotor shaft assembly (24) to an expected rate of change of a zero pitch angle propeller.

13. The system (204) of claim 10, 11 or 12, further comprising detecting an aircraft-on-ground condition, and wherein commanding an angle change of the propeller blades comprises commanding the angle change only when the aircraft-on-ground condition is detected.

14. The system (204) of any of claims 10 to 13, further comprising returning the propeller blades to a zero pitch angle after issuing the test passed signal.

15. The system (204) of any of claims 10 to 14, wherein commanding an angle change of the propeller blades comprises commanding an angle change to a target blade pitch that is less than a maximum blade pitch.

## Patentansprüche

1. Computerimplementiertes Verfahren zum Testen einer Propellersegelstellungsfunktion, das Verfahren umfassend:
Überwachen eines Drehmoments im Zeitverlauf durch einen Prozessor (504) einer Computervorrichtung, das auf eine Rotorwellenbaugruppe (24) ausgeübt wird, die betriebsmäßig mit einem Propeller (30) eines Flugzeugs verbunden ist;
Befehlen einer Winkeländerung der Propellerblätter des Propellers (30) durch den Prozessor (504) der Computervorrichtung als Reaktion auf einen Empfang eines Auslösesignals bei dem Prozessor (504), das bei Initiieren einer Aufgabe oder eines Verfahrens, wie einer Motorabschaltung, die in dem Flugzeug durchgeführt wird, erzeugt wird;
Vergleichen eines nach der Winkeländerung auf die Rotorwellenbaugruppe (24) ausgeübten Drehmoments mit einem erwarteten Drehmoment ohne die befohlene Winkeländerung durch den Prozessor (504) der Computervorrichtung und als Reaktion auf die befohlene Winkeländerung und Erlangen einer Drehmomentdifferenz durch den Prozessor (504); und
Ausgeben eines Signals "Test bestanden" durch den Prozessor (504) der Computervorrichtung, wenn die Drehmomentdifferenz einen Schwellenwert überschreitet, und eines Signals "Test fehlgeschlagen", wenn die Drehmomentdifferenz den Schwellenwert nicht überschreitet.

2. Verfahren nach Anspruch 1, wobei Überwachen des Drehmoments im Zeitverlauf Überwachen einer Änderungsrate des Drehmoments im Zeitverlauf umfasst.

3. Verfahren nach Anspruch 2, wobei Vergleichen eines auf die Rotorwellenbaugruppe (24) ausgeübten Drehmoments nach einer Winkeländerung mit einem erwarteten Drehmoment Vergleichen der Änderungsrate des auf die Rotorwellenbaugruppe (24) ausgeübten Drehmoments mit einer erwarteten Änderungsrate eines Propellers mit Nullsteigungswinkel umfasst.

4. Verfahren nach einem der vorhergehenden Ansprüche, ferner umfassend Detektieren eines Zustands "Flugzeug am Boden", und wobei Befehlen einer Winkeländerung der Propellerblätter nur dann Befehlen der Winkeländerung umfasst, wenn der Zustand "Flugzeug am Boden" detektiert wird.

5. Verfahren nach einem der vorhergehenden Ansprüche, wobei Überwachen des Drehmoments im Zeitverlauf Überwachen eines der folgenden Elemente umfasst:
eines Abstands zwischen Zähnen der Rotorwellenbaugruppe (24); oder
eines Hydraulikdrucks einer Hydraulikdruckreaktionsbaugruppe (34), die betriebsmäßig mit der Rotorwellenbaugruppe (24) verbunden ist.

6. Verfahren nach einem der vorhergehenden Ansprüche, wobei Befehlen einer Winkeländerung der Propellerblätter Befehlen einer Winkeländerung bis auf eine Sollblattsteigung umfasst, die kleiner als eine maximale Blattsteigung ist.

7. Verfahren nach einem der vorhergehenden Ansprüche, wobei Befehlen einer Winkeländerung der Propellerblätter schrittweises Ändern einer Steigung der Propellerblätter umfasst, bis eine Sollsteigung der Blätter erreicht ist.

8. Verfahren nach Anspruch 7, wobei Vergleichen eines nach der Winkeländerung auf die Rotorwellenbaugruppe (24) ausgeübten Drehmoments mit einem erwarteten Drehmoment Vergleichen umfasst, bis entweder der Sollblattwinkel erreicht ist oder eine Drehmomentdifferenz erreicht ist, die den Schwellenwert überschreitet.

9. Verfahren nach einem der vorhergehenden Ansprüche, wobei Vergleichen eines auf die Rotorwellenbaugruppe (24) ausgeübten Drehmoments nach der Winkeländerung mit einem erwarteten Drehmoment Vergleichen einer Drehzahl des Propellers (30) mit einer Schwellenwertdrehzahl und Bestimmen, ob die Drehzahl des Propellers (30) über der Schwellenwertdrehzahl ist, umfasst.

10. System (204) zum Testen einer Propellersegelstellungsfunktion, das System (204) umfassend:
einen Speicher (502);
einen Prozessor (504), der mit dem Speicher (502) gekoppelt ist; und
eine Anwendung (506a), die in dem Speicher (502) gespeichert ist und Programmcode umfasst, der von dem Prozessor (504) ausführbar ist zum:
Überwachen eines Drehmoments im Zeitverlauf, das auf eine Rotorwellenbaugruppe (24) ausgeübt wird, die betriebsmäßig mit einem Propeller (30) eines Flugzeugs verbunden ist;
Befehlen einer Winkeländerung der Propellerblätter des Propellers (30) als Reaktion auf den Empfang eines Auslösesignals, das beim Initiieren einer Aufgabe oder eines Verfahrens, wie einer Motorabschaltung, die in dem Flugzeug durchgeführt wird, erzeugt wird;
Vergleichen eines nach der Winkeländerung auf die Rotorwellenbaugruppe (24) ausgeübten Drehmoments mit einem erwarteten Drehmoment ohne die befohlene Winkeländerung als Reaktion auf die befohlene Winkeländerung und Erlangen einer Drehmomentdifferenz; und
Ausgeben eines Signals "Test bestanden", wenn die Drehmomentdifferenz einen Schwellenwert überschreitet, und eines Signals "Test fehlgeschlagen", wenn die Drehmomentdifferenz den Schwellenwert nicht überschreitet.

11. System (204) nach Anspruch 10, wobei Überwachen des Drehmoments im Zeitverlauf Überwachen einer Änderungsrate des Drehmoments im Zeitverlauf umfasst.

12. System (204) nach Anspruch 11, wobei Vergleichen eines auf die Rotorwellenbaugruppe (24) ausgeübten Drehmoments nach einer Winkeländerung mit einem erwarteten Drehmoment Vergleichen der Änderungsrate des auf die Rotorwellenbaugruppe (24) ausgeübten Drehmoments mit einer erwarteten Änderungsrate eines Propellers mit Nullsteigungswinkel umfasst.

13. System (204) nach Anspruch 10, 11 oder 12, ferner umfassend Detektieren eines Zustands "Flugzeug am Boden", und wobei Befehlen einer Winkeländerung der Propellerblätter nur dann Befehlen der Winkeländerung umfasst, wenn der Zustand "Flugzeug am Boden" detektiert wird.

14. System (204) nach einem der Ansprüche 10 bis 13, ferner umfassend Zurückführen der Propellerblätter auf einen Nullsteigungswinkel nach Ausgeben des Signals "Test bestanden".

15. System (204) nach einem der Ansprüche 10 bis 14, wobei Befehlen einer Winkeländerung der Propellerblätter Befehlen einer Winkeländerung bis auf eine Sollblattsteigung umfasst, die kleiner als eine maximale Blattsteigung ist.

## Revendications

1. Procédé mis en œuvre par ordinateur destiné à tester une fonction de mise en drapeau d'hélice, le procédé comprenant :
la surveillance dans le temps, par un processeur (504) d'un dispositif informatique, d'un couple appliqué à un ensemble arbre rotor (24) relié de manière opérationnelle à une hélice (30) d'un aéronef ;
la commande, par le processeur (504) du dispositif informatique, d'une variation d'angle de pales d'hélice de l'hélice (30) en réponse à la réception, au niveau du processeur (504), d'un signal de déclenchement généré lors du lancement d'une tâche ou d'une procédure, telle qu'un arrêt moteur, effectuée à l'intérieur de l'aéronef ;
la comparaison, par le processeur (504) du dispositif informatique et en réponse à la variation d'angle qui est commandée, d'un couple après variation d'angle appliqué à l'ensemble arbre rotor (24) à un couple attendu sans la variation d'angle commandée et l'obtention, par le processeur (504), d'une différence de couple ; et
l'émission, par le processeur (504) du dispositif informatique, d'un signal de test réussi lorsque la différence de couple dépasse un seuil et d'un signal de test échoué lorsque la différence de couple ne dépasse pas le seuil.

2. Procédé selon la revendication 1, dans lequel la surveillance du couple dans le temps comprend la surveillance d'un taux de variation du couple dans le temps.

3. Procédé selon la revendication 2, dans lequel la comparaison d'un couple après variation d'angle appliqué à l'ensemble arbre rotor (24) à un couple attendu comprend la comparaison du taux de variation du couple appliqué à l'ensemble arbre rotor (24) à un taux de variation attendu d'une hélice à angle de pas nul.

4. Procédé selon l'une quelconque revendication précédente, comprenant en outre la détection d'une condition d'aéronef au sol, et dans lequel la commande d'une variation d'angle des pales d'hélice comprend la commande de la variation d'angle uniquement lorsque la condition d'aéronef au sol est détectée.

5. Procédé selon l'une quelconque revendication précédente, dans lequel la surveillance du couple dans le temps comprend la surveillance de l'un de :
un espacement entre des dents de l'ensemble arbre rotor (24) ; ou
une pression hydraulique d'un ensemble de réaction de pression hydraulique (34) relié de manière opérationnelle à l'ensemble arbre rotor (24).

6. Procédé selon l'une quelconque revendication précédente, dans lequel la commande d'une variation d'angle des pales d'hélice comprend la commande d'une variation d'angle vers un pas de pale cible qui est inférieur à un pas de pale maximal.

7. Procédé selon l'une quelconque revendication précédente, dans lequel la commande d'une variation d'angle des pales d'hélice comprend la variation progressive d'un pas des pales d'hélice jusqu'à ce qu'un pas de pale cible soit atteint.

8. Procédé selon la revendication 7, dans lequel la comparaison d'un couple après variation d'angle appliqué à l'ensemble arbre rotor (24) à un couple attendu comprend la comparaison jusqu'à ce que la première de la réalisation du pas de pale cible et de l'obtention de la différence de couple qui dépasse le seuil se produise.

9. Procédé selon l'une quelconque revendication précédente, dans lequel la comparaison d'un couple après variation d'angle appliqué à l'ensemble arbre rotor (24) à un couple attendu comprend la comparaison d'une vitesse de rotation de l'hélice (30) à une vitesse de rotation seuil, et la détermination du fait que la vitesse de rotation de l'hélice (30) est supérieure à la vitesse de rotation seuil.

10. Système (204) destiné à tester une fonction de mise en drapeau d'hélice, le système (204) comprenant :
une mémoire (502) ;
un processeur (504) couplé à la mémoire (502) ; et
une application (506a) stockée dans la mémoire (502) et comprenant un code de programme pouvant être exécuté par le processeur (504) pour :
surveiller dans le temps un couple appliqué à un ensemble arbre rotor (24) relié de manière opérationnelle à une hélice (30) d'un aéronef ;
commander une variation d'angle de pales d'hélice de l'hélice (30) en réponse à la réception d'un signal de déclenchement généré lors du lancement d'une tâche ou d'une procédure, telle qu'un arrêt moteur, effectuée à l'intérieur de l'aéronef ;
comparer, en réponse à la variation d'angle qui est commandée, un couple après variation d'angle appliqué à l'ensemble arbre rotor (24) à un couple attendu sans la variation d'angle commandée et obtenir une différence de couple ; et
émettre un signal de test réussi lorsque la différence de couple dépasse un seuil et d'un signal de test échoué lorsque la différence de couple ne dépasse pas le seuil.

11. Système (204) selon la revendication 10, dans lequel la surveillance du couple dans le temps comprend la surveillance d'un taux de variation du couple dans le temps.

12. Système (204) selon la revendication 11, dans lequel la comparaison d'un couple après variation d'angle appliqué à l'ensemble arbre rotor (24) à un couple attendu comprend la comparaison du taux de variation du couple appliqué à l'ensemble arbre rotor (24) à un taux de variation attendu d'une hélice à angle de pas nul.

13. Système (204) selon les revendications 10, 11 ou 12, comprenant en outre la détection d'une condition d'aéronef au sol, et dans lequel la commande d'une variation d'angle des pales d'hélice comprend la commande de la variation d'angle uniquement lorsque la condition d'aéronef au sol est détectée.

14. Système (204) selon l'une quelconque des revendications 10 à 13, comprenant en outre le retour des pales d'hélice à un angle de pas nul après l'émission du signal de test réussi.

15. Système (204) selon l'une quelconque des revendications 10 à 14, dans lequel la commande d'une variation d'angle des pales d'hélice comprend la commande d'une variation d'angle vers un pas de pale cible qui est inférieur à un pas de pale maximal.
